# EUROPEAN PATENT SPECIFICATION

(11) **EP 1 585 707 B1**
(45) Date of publication and mention of the grant of the patent: **16.12.2009**
(21) Application number: 04701283.6
(22) Date of filing: 09.01.2004
(51) Int. Cl.: C01G 23/02

(54) **PURIFICATION OF TITANIUM TETRACHLORIDE**
REINIGUNG VON TITANTETRACHLORID
PURIFICATION DE TETRACHLORURE DE TITANE

(30) Priority: 09.01.2003 US 439190 P
(43) Date of publication of application: 19.10.2005
(73) Proprietor: E.I. DU PONT DE NEMOURS AND COMPANY, Wilmington, DE 19898 (US)
(72) Inventor: CRONIN, James, T., Townsend, Delaware 19734 (US); ELKINS, Thomas, Shields, Waveryly, Tenneessee 37185 (US); HELBERG, Lisa, Edith, Middletown, Delaware 19709 (US); MERKLE, James, Elliott, Jr., Long Beach, Mississippi 39560 (US); MIRABELLA, Steven, Edward, New Johnsonville, Tenneessee 37134 (US)
(74) Representative: Towler, Philip Dean
(86) International application number: PCT/US2004/000765
(87) International publication number: WO 2004/063096

(56) References cited:
- GB-A- 744 074
- US-A- 2 592 021
- US-A- 2 600 881
- DATABASE CA [Online] CHEMICAL ABSTRACTS SERVICE, COLUMBUS, OHIO, US; JAEGER, LUBOMIR ET AL: "Purification of crude titanium tetrachloride with surface-active substances" XP002281482 retrieved from STN Database accession no. 56:44009 & CS 97 317 C (JAEGER, LUBOMIR;SIMEK, BRETISLAV) 8 July 1957 (1957-07-08)

## Description

### BACKGROUND OF THE INVENTION

This invention relates to a process for the removal of multiple metal chlorides from a crude titanium tetrachloride stream produced by chlorination of titanium-bearing compounds, and more particularly to a process wherein the removal of multiple metal chlorides occurs in a single reaction vessel.

In the production of titanium tetrachloride, raw materials, including ilmenite or rutile ores or other titanium-containing materials such as those obtained from beneficiating these ores, are reacted with chlorine and carbon (carbochlorination) to yield a mixture of metal chlorides in a crude titanium tetrachloride stream, from which titanium tetrachloride, of sufficient purity may be recovered that may be used as a starting material to make titanium metal or titanium dioxide pigment.

Common metal chloride impurities present in the crude titanium tetrachloride includes chlorides and complex chlorides of aluminum, niobium, tantalum, and vanadium. These metal chloride impurities are not susceptible to removal by distillation because of the proximity of their boiling points to that of titanium tetrachloride or their solubility in the titanium tetrachloride. They can have a detrimental impact on downstream processes. Thus, it is important to remove them or treat them to inhibit their detrimental properties.

Aluminum chloride, for example, is highly corrosive and attacks the metal materials of construction in the equipment downstream of its formation; thus, aluminum chloride must be rendered non-corrosive via treatment with a passivating agent early in the processing of making crude titanium tetrachloride.

Niobium and.tantalum chlorides may condense downstream and cause fouling problems. Conveniently these two metal chlorides may be removed in the passivation of the aluminum chloride through their preferential reaction with certain aluminum passivating agents.

Water, sodium chloride, sodium hydroxide or a mixture of these are the most common agents added to passivate aluminum chloride. The passivated aluminum compounds are more easy-to-separate from the crude titanium tetrachloride stream than aluminum chloride. Aluminum passivating agents are selected to form aluminum compounds that are not corrosive to the equipment. See, for example, U.S. Patents 2,600,881; 4,125,586; and U.S. 4,521,384. Furthermore, as taught by Bonsack in U.S. Patent No. 4,070,252, use of water to treat crude titanium chloride streams also converts niobium and tantalum chlorides to species insoluble in liquid titanium tetrachloride, which can be readily removed by filtration or other simple separation techniques.

Vanadium chlorides form colored species that must be removed if the titanium tetrachloride is to be used for production of titanium dioxide pigment. Typically, treatment agents are added to the crude titanium tetrachloride to chemically modify these vanadium compounds so that they may be removed. Therefore, there is a body of art that teaches treatment for removing vanadium chlorides from titanium tetrachloride, but this body of art is essentially separate from that of the passivation of aluminum chloride in titanium tetrachloride.

The prior art in the passivation of vanadium chlorides discloses the use of catalytic metals, such as iron and copper or other agents such as activated carbons, hydrogen, hydrogen sulfide and a number of organic compounds, such as oils, esters, and amines. Examples of prior art teachings for removal of vanadium compounds from crude titanium tetrachloride include the following. Swiss Patent No. 262267, published in 1949, discloses removing colored metal chlorides (Cr, and V) by treating the crude titanium tetrachloride, at an elevated temperature, with a metal-free organic compound which is carbonized by the chlorides. U.S. Patent No. 2,560,424 discloses a method to remove the colored impurities from titanium tetrachloride by simultaneously adding to the crude titanium tetrachloride small amounts of aluminum metal and anhydrous aluminum chloride. Australian Patent No. 219,385 teaches the use of metallic sodium to remove vanadium impurities from titanium tetrachloride.

While methods have long been available for treatment of crude titanium tetrachloride, treatments to remove the metal chlorides of aluminum, niobium and tantalum have been practiced separately from treatments to remove vanadium chlorides from crude titanium tetrachloride. The present invention is a method to remove metal chloride impurities including the chlorides of aluminum and vanadium in a way that minimizes the loss of process raw materials such as titanium containing materials, coke, chlorine, and vanadium and aluminum passivating agents. The present process is more cost effective, produces less waste and more product and is the result of a simple change in the sequence of and locations for the additions of the aluminum and vanadium passivating agents.

### SUMMARY OF THE INVENTION

The present invention provides a method for purification of a crude titanium tetrachloride chlorinator discharge from the carbochlorination of titanium containing materials to minimize the loss of raw materials resulting from passivation of aluminum chloride and vanadium oxychloride, comprising:
(a) mixing into a crude titanium tetrachloride chlorinator discharge comprising vanadium chlorides and aluminum chloride:
   (1) a vanadium passivating agent to passivate the vanadium chlorides present and form in the discharge one or more easy-to-separate vanadium-containing compounds, wherein the vanadium passivating agent is an organic oil, and
   (2) an aluminum passivating agent to passivate the aluminum chloride present and form in the discharge one or more easy-to-separate aluminum-containing compounds wherein the aluminum passivating agent is selected from the group consisting of water, water containing solutions, water containing mixtures, and carboxylic acids,
   with the proviso that:
   (i) when, after mixing the vanadium passivating agent into the chlorinator discharge, titanium oxychloride is formed in the discharge, no aluminum passivating agent is mixed into the discharge; and
   (ii) when, after mixing the vanadium passivating agent into the chlorinator discharge, no titanium oxychloride is formed, mixing into the discharge an amount of aluminum passivating agent to passivate the aluminum chloride and react with the titanium tetrachloride to form titanium oxychloride; and
(b) separating from the titanium tetrachloride chlorinator discharge the easy-to-separate vanadium- and aluminum-containing compounds to form a purified titanium tetrachloride.
In the present process the separation typically depends upon the phases present in the discharge and suitable separation techniques are well known in the art. Typically a distillation process is employed for vapor-liquid-solid separation, preferably selected from the group consisting of flash distillation and multi-stage distillation. The solid-liquid separation process can be a filtration or centrifugation.

The addition of the vanadium and aluminum passivating agents may be made such that the vanadium passivating agent and the aluminum passivating agent are mixed into the discharge essentially simultaneously or the vanadium passivating agent may be mixed into the discharge before the aluminum passivating agent is mixed into the discharge, or the vanadium passivating agent may be mixed into the discharge after the aluminum passivating agent is mixed into the discharge or the vanadium passivating agent may be mixed into the discharge both before and after the aluminum passivating agent is mixed into the discharge.

### DETAILED DESCRIPTION OF THE INVENTION

The present invention is a method in the purification of a crude titanium tetrachloride chlorinator discharge from the carbochlorination of titanium containing materials to minimize the loss of raw materials resulting from passivation of aluminum chloride and vanadium chlorides.

The term vanadium chlorides as used herein includes vanadium oxychloride compounds and other vanadium chloride compounds that are not susceptible to removal from crude titanium tetrachloride by distillation.

In the present invention, the passivation of vanadium chlorides may be accomplished in a two step addition of the vanadium passivating agent or in a single step addition. In the two step addition, a vanadium passivating agent is mixed into the discharge in an amount sufficient to reduce, but not eliminate the vanadium chlorides present and form one or more easy-to-separate vanadium-containing compounds. When titanium oxychloride is present in the discharge treated with the vanadium passivating agent, no aluminum passivating agent is added. When titanium oxychloride is not present, an amount of aluminum passivating agent sufficient to form titanium oxychloride is added to form easy-to-separate aluminum-containing compounds. The easy-to-separate vanadium- and aluminum-containing compounds may be separated from the discharge. Then, a second addition step of a vanadium passivating agent in an amount sufficient to passivate the remaining vanadium chlorides is made to form easy-to-separate vanadium-containing compounds, followed by a separation step to form a purified titanium tetrachloride.

In the single step addition of the vanadium passivating agent, sufficient vanadium passivating agent is mixed into the discharge to passivate all of the vanadium chlorides in a single step, and, if necessary, addition of aluminum passivating agent is made if there remains active aluminum chloride in the discharge as determined by the absence of titanium oxychloride in the discharge. In any event, all of the aluminum chloride present in the discharge must be passivated, no matter which method (two step or single step) is used to passivate the vanadium chlorides, since the presence of active aluminum chloride after this point in the overall purification process will result in corrosion of downstream equipment.

The terms passivating and passivation as used herein mean converting the vanadium- and aluminum-containing compounds present in the crude titanium tetrachloride discharge to compounds that are easy-to-separate from the titanium tetrachloride and neutralizing the compounds' adverse effects. "Easy-to-separate" typically means a solid, but it also includes compounds that may be separated from the titanium tetrachloride by distillation or removal as an adsorbed species, and the like. Surprisingly, it has been found that the product of the passivation of vanadium oxychloride in crude titanium tetrachloride discharge with an organic oil is a passivating agent for aluminum chloride. The result of this discovery according to the present invention is an improved chlorination process wherein there is the potential to save production costs by reducing the titanium yield loss while at the same time improving raw material utilization to reduce process cost and the amount waste - solid, liquid, and vapor..

In the present invention, the point of addition of the passivating agents into the flow of the chlorinator product stream, that is, crude titanium tetrachloride discharge, may be optimized for (1) the reduction and elimination of corrosion from active aluminum chloride, (2) minimal yield losses of raw materials, and (3) to take advantage of the ability of passivated vanadium compounds to provide at least part of the total amount of passivating agent needed to control passivation of aluminum chloride, as measured by titanium oxychloride concentration.

Addition of the aluminum passivating agent is dependent on whether there is titanium oxychloride in the crude titanium tetrachloride chlorinator discharge stream. Aluminum chloride is completely passivated once titanium oxychloride is formed in the discharge. Aluminum passivating agent may be mixed into the chlorinator discharge simultaneously with the vanadium passivating agent or before addition of the vanadium passivating agent or after addition of the vanadium passivating agent. After mixing the vanadium or aluminum passivating agent into the chlorinator discharge, the discharge is analyzed for titanium oxychloride. If titanium oxychloride is formed, addition of aluminum passivating agent is not required. If no titanium oxychloride is formed, then an amount of aluminum passivating agent sufficient to passivate the aluminum chloride and react with the titanium tetrachloride to form titanium oxychloride is mixed into the chlorinator discharge.

Water is most preferred as the aluminum passivating agent in the present process. Water solutions or mixtures may be used as passivating agents even if the materials other than the water show no reactivity towards aluminum chloride.

Since some fraction of the aluminum chloride is passivated by the reaction product of vanadium oxychloride with the vanadium passivating agent, it is preferable to add only 1 to 1.5 times the amount of passivating agent to stoichiometrically react with the remaining aluminum in the discharge. More preferably the amount of aluminum passivating agent added is 1.1 to 1.3 times the stoichiometric requirement.

Organic oils have been found to be useful as vanadium passivating agents including petroleum oils, such as mineral oils and waxes, and vegetable oils and combinations thereof. The organic oil may be hydrogenated. A specific example of a useful organic oil is hydrogenated naphthenic oil. The essential element in selecting a substance as a vanadium passivating agent is the ability of the reaction product of the passivating agent with vanadium oxychloride to function as an aluminum passivating agent.

### Especially preferred as the organic oil vanadium passivating agent is a hydrogenated naphthenic oil.

The amount of vanadium passivating agent is based on the agent's stoichiometric reaction ratio with the vanadium chlorides. Ideally, this ratio should be determined experimentally, rather than theoretically. Preferably the amount of vanadium passivating agent added is 0.8 to 1.2 times the stoichiometric quantity required to react with the vanadium chlorides to be removed from the stream being treated, which may be all or any fraction of the vanadium present in that stream. More preferably the amount of vanadium passivating agent is from 0.95 to 1.1 times the stoichiometric requirement.

Regardless of the amount of vanadium passivating agent added, it is possible to calculate the amount of vanadium removal reaction products capable of passivating aluminum chloride and then reduce the amount of aluminum passivating agent or reduce the addition rate by an equivalent amount which can substantially reduce titanium losses due to excess addition of aluminum passivating agents which react with titanium tetrachloride: For example, one method to calculate the amount of vanadium removal reaction products capable of passivating aluminum chloride is by infrared spectroscopy, based on concentration of vanadium oxychloride in the chlorinator discharge.

Following addition of the passivating agents, there is provided a separation step wherein the easy-to-separate vanadium- and aluminum- containing compounds are separated from the titanium tetrachloride chlorinator discharge to form a purified titanium tetrachloride using a vapor-liquid-solid separation process or a solid-liquid separation process. A vapor-liquid-solid separation process is typically a distillation process, preferably selected from the group consisting of flashing distillation and multi-stage distillation. A solid-liquid separation process is typically filtration or centrifugation.

The separation process may occur in one or more steps. For example, depending on the order of addition of the vanadium and aluminum passivating agents, intermediate separation steps may be performed. Particularly, in a two step addition of the vanadium passivating agent, a separation step may be performed after all of the aluminum chloride has been converted to easy-to-separate aluminum-containing compounds. A separation step is performed after the second addition of the vanadium passivating agent.

Alternatively, following a separation step after addition of vanadium passivating agent, a purge containing products from the passivation of vanadium chlorides may be used as the aluminum passivating agent.

Process control methods for the addition of the aluminum passivating agent, the vanadium passivating agent, or both can be applied to the present invention. For example, the control methods disclosed in U.S. Patent 6,562,312 are particularly useful for controlling addition of aluminum passivating agent. Therein is provided, an in-process, real time control loop capable of controlling the passivation of aluminum chloride in crude titanium tetrachloride chlorinator discharge wherein an aluminium passivating agent is mixed into the discharge in an amount sufficient to form titanium oxychloride. The amount of aluminum passivating agent added is controlled based on comparison of the titanium oxychloride concentration measured in-process with an aim point Preferably, the concentration of titanium oxychloride is measured by an optical method selected from the group consisting of transmission filter Infrared spectroscopy, transmission Fourier Transform Infrared spectroscopy, Raman spectroscopy, Attenuated Total Reflectance Infrared spectroscopy, and Attenuated Total Reflectance Fourier Transform Infrared spectroscopy.

The presence and concentration of titanium oxychloride may be measured by use of transmission filter Infrared spectroscopy, transmission Fourier Transform Infrared spectroscopy, Raman spectroscopy, and Attenuated Total Reflectance Infrared spectroscopy, and Attenuated Total Reflectance Fourier Transform Infrared spectroscopy in a frequency range of from 800 to 2000 cm⁻¹.

For accuracy and precision, it is most preferred to measure the presence and the concentration of titanium oxychloride by diamond based Attenuated Total Reflectance Fourier Transform Infrared at a frequency of about 820 cm⁻¹. Diamond based attenuated reflectance means that the infrared probe or detector placed in the process stream has a diamond element. Suitable probe units include those manufactured by ASI Applied Systems of Millersville, MD, Axiom Analytic, Inc. of Irvine, CA and others.

In the following examples VOCl₃ passivation is measured by Fourier Transform Infrared Spectroscopy (FTIR).

### Example 1

A round bottomed flask was filled with 100 mL TiCl₄, 0.92 g VOCl₃ (5.31 mmol), and 0.174 g AlCl₃ (1.30 mmol). The AlCl₃ was handled air-free to avoid moisture contamination. The reaction mixture was heated to 100°C. Hydrogenated naphthenic oil (ERGON Incorporated's product brand Ergon H-750) was added (1.0333 g). The reaction mixture was held at temperature for 30 minutes. At this point, all of the VOCl₃ was passivated, as measured by FTIR. To determine how much unreacted AlCl₃ remained, 30 microliter (1.61 mmol) of water were added by syringe. Any AlCl₃ in solution would react with the water before TiOCl₂ was formed. A total of 1531 ppm TiOCl₂ was generated from the water addition, as observed by FTIR. If all of the AlCl₃ was present, only 280 ppm should have been observed. Since an extra 1301 ppm TiOCl₂ (1.67 mmol) formed, all of the AlCl₃ had already been passivated in the solution.

### Example 2

A round bottomed flask was filled with 100 mL TiCl₄, 0.92 g VOCl₃ (5.31 mmol), and 1.74 g AlCl₃ (13.0 mmol). The AlCl₃ was handled air-free to avoid moisture contamination. The reaction mixture was heated to 100°C. The oil from Example 1 was added (1.0401 g). The reaction mixture was held at temperature for 30 minutes. At this point, all of the VOCl₃ was passivated, as measured by FTIR. To determine how much unreacted AlCl₃ remained, 290 microliter (16.1 mmol) of water were added by syringe. A total of 6808 ppm TiOCl₂ was generated from the water addition. If all of the AlCl₃ was still present, only 2371 ppm TiOCl₂ should have been observed. Since an extra 4437 ppm TiOCl₂ (5.70 mmol) formed, part of the AlCl₃ was passivated in the solution. The amount of AlCl₃ reacted was stoichiometrically equivalent to the amount of oxygen initially present in solution as part of the VOCl₃, within experimental error.

### Example 3

Water was added as an aluminum passivating agent to a crude TiCl₄ stream containing metal chloride contaminants AlCl₃ and VOCl₃ produced by the chlorination of titanium-bearing ore, following discharge from the chlorinator and separation of condensable solids. Water addition was in control by the control method described in U.S. Patent No. 6,562,312. The hydrogenated, naphthenic oil, from Example 1 (vanadium passivating agent) was added to the TiCl₄ stream at the same location as the water addition. In contrast to operating the process in the absence of the vanadium passivating agent, the demand for aluminum passivating agent was reduced by 50% while reducing VOCl₃ by 20% of its original concentration.

## Claims

1. A method for purification of a crude titanium tetrachloride chlorinator discharge from the carbochlorination of titanium containing materials to minimize the loss of raw materials resulting from passivation of aluminium chloride and vanadium oxychloride, comprising:
(a) mixing into the crude titanium tetrachloride chlorinator discharge comprising vanadium chlorides and aluminium chloride:
(1) a vanadium passivating agent to passivate the vanadium chlorides present and form in the discharge one or more easy-to-separate vanadium-containing compounds, wherein the vanadium passivating agent is an organic oil, and
(2) an aluminium passivating agent to passivate the aluminium chloride present and form one or more easy-to-separate aluminium-containing compounds wherein the aluminium passivating agent is selected from the group consisting of water, water containing solutions, water containing mixture, and carboxylic acids,
with the proviso that:
(i) when, after mixing the vanadium passivating agent into the chlorinator discharge, titanium oxychloride is formed in the discharge, no aluminium passivating agent is mixed into the discharge; and
(ii) when after mixing the vanadium passivating agent into the chlorinator discharge, no titanium oxychloride is formed in the discharge, mixing into the discharge an amount of aluminium passivating agent to passivate the aluminium chlorides and react with the titanium tetrachloride to form titanium oxychloride;
and
(b) separating from titanium tetrachloride chlorinator discharge the easy-to-separate vanadium- and aluminium-containing compounds to form a purified titanium tetrachloride.

2. The process of claim 1 wherein the separation process is selected from the group consisting of flashing distillation, multi-stage distillation, a solid-liquid separation process, filtration, and centrifugation.

3. The process of claim 1 wherein the vanadium passivating agent and the aluminum passivating agent are mixed into the discharge essentially simultaneously.

4. The process of claim 1 wherein the vanadium passivating agent is mixed into the discharge before the aluminum passivating agent is mixed into the discharge stream.

5. The process of claim 1 wherein the vanadium passivating agent is mixed into the discharge after the aluminum passivating agent is mixed into the discharge stream.

6. The process of claim 1 wherein the vanadium passivating agent is mixed into the discharge in an amount sufficient to reduce the concentration of, but not eliminate the vanadium chlorides present.

7. The process of claim 1 wherein the aluminium passivating agent is comprised of a purge containing products from the passivation of vanadium chlorides taken from a process step following the separation step.

8. The process of claim 1 wherein the addition of the vanadium passivating agent and the aluminium passivating agent are controlled by a process control method.

9. The process of claim 1 wherein the vanadium passivating agent is a petroleum oil; a vegetable oil or a combination thereof.

10. The process of claim 1 wherein the vanadium passivating agent is a hydrogenated naphthenic oil.

## Patentansprüche

1. Verfahren zur Reinigung eines Chlorierer-Austrags von Rohtitantetrachlorid aus der Carbochlorierung von titanhaltigen Materialien, um den aus der Passivierung von Aluminiumchlorid und Vanadiumoxychlorid resultierenden Verlust an Rohmaterialien zu minimieren, wobei das Verfahren aufweist:
(a) Einmischen in den Chlorierer-Rohtitantetrachloridaustrag, der Vanadiumchloride und Aluminiumchlorid aufweist:
(1) eines Vanadiumpassivierungsmittels zum Passivieren der anwesenden Vanadiumchloride und zur Bildung einer oder mehrerer leicht abtrennbarer vanadiumhaltiger Verbindungen in dem Austrag, wobei das Vanadiumpassivierungsmittel ein organisches Öl ist, und
(2) eines Aluminiumpassivierungsmittels zum Passivieren des anwesenden Aluminiumchlorids und zur Bildung einer oder mehrerer leicht abtrennbarer aluminiumhaltiger Verbindungen, wobei das Aluminiumpassivierungsmittel aus der Gruppe ausgewählt ist, die aus Wasser, wasserhaltigen Lösungen, einem wasserhaltigen Gemisch und Carbonsäuren besteht,
unter der Bedingung, daß:
(i) wenn nach dem Einmischen des Vanadiumpassivierungsmittels in den Chlorierer-Austrag Titanoxychlorid in dem Austrag gebildet wird, kein Aluminiumpassivierungsmittel in den Austrag eingemischt wird; und
(ii) wenn nach dem Einmischen des Vanadiumpassivierungsmittels in den Chlorierer-Austrag kein Titanoxychlorid in dem Austrag gebildet wird, ein Anteil Aluminiumpassivierungsmittel in den Austrag eingemischt wird, um die Aluminiumchloride zu passivieren und mit dem Titantetrachlorid zu Titanoxychlorid zu reagieren;
und
(b) Abtrennen der leicht abtrennbaren vanadium- und aluminiumhaltigen Verbindungen von dem Chlorierer-Titantetrachloridaustrag zur Bildung eines gereinigten Titantetrachlorids.

2. Verfahren nach Anspruch 1, wobei das Trennverfahren aus der Gruppe ausgewählt ist, die aus Entspannungsdestillation, mehrstufiger Destillation, einem Fest/Flüssig-Trennverfahren, Filtration und Zentrifugation besteht.

3. Verfahren nach Anspruch 1, wobei das Vanadiumpassivierungsmittel und das Aluminiumpassivierungsmittel im wesentlichen gleichzeitig in den Austrag eingemischt werden.

4. Verfahren nach Anspruch 1, wobei das Vanadiumpassivierungsmittel in den Austrag eingemischt wird, bevor das Aluminiumpassivierungsmittel in den Austragsstrom eingemischt wird.

5. Verfahren nach Anspruch 1, wobei das Vanadiumpassivierungsmittel in den Austrag eingemischt wird, nachdem das Aluminiumpassivierungsmittel in den Austragsstrom eingemischt wird.

6. Verfahren nach Anspruch 1, wobei das Vanadiumpassivierungsmittel in einem Anteil in den Austrag eingemischt wird, der ausreicht, um die Konzentration der anwesenden Vanadiumchloride zu vermindern, aber diese nicht zu beseitigen.

7. Verfahren nach Anspruch 1, wobei das Aluminiumpassivierungsmittel aus einer Spülung besteht, die Passivierungsprodukte von Vanadiumchloriden enthält, die aus einem auf den Trennschritt folgenden Verfahrensschritt entnommen werden.

8. Verfahren nach Anspruch 1, wobei die Zugabe des Vanadiumpassivierungsmittels und des Aluminiumpassivierungsmittels durch ein Prozeßsteuerungsverfahren gesteuert wird.

9. Verfahren nach Anspruch 1, wobei das Vanadiumpassivierungsmittel ein Öl auf Erdölbasis, ein Pflanzenöl oder eine Kombination davon ist.

10. Verfahren nach Anspruch 1, wobei das Vanadiumpassivierungsmittel ein hydriertes naphthenhaltiges Öl ist.

## Revendications

1. Procédé pour la purification d'une décharge de chloreur de tétrachlorure de titane brut provenant de la carbochloration de matériaux contenant du titane pour minimiser la perte de matières premières résultant de la passivation de chlorure d'aluminium et d'oxychlorure de vanadium, comprenant:
(a) le mélange dans la décharge du chloreur de tétrachlorure de titane brut comprenant des chlorures de vanadium et du chlorure d'aluminium:
(1) d'un agent de passivation du vanadium pour passiver les chlorures de vanadium présents et former dans la décharge un ou plusieurs composés contenant du vanadium faciles à séparer, où l'agent de passivation du vanadium est une huile organique, et
(2) d'un agent de passivation de l'aluminium pour passiver le chlorure d'aluminium présent et former un ou plusieurs composés contenant de l'aluminium faciles à séparer, où l'agent de passivation de l'aluminium est choisi dans le groupe constitué d'eau, de solutions contenant de l'eau, d'un mélange contenant de l'eau et d'acides carboxyliques,
sous réserve que:
(i) lorsque, après le mélange de l'agent de passivation du vanadium dans la décharge du chloreur, de l'oxychlorure de titane est formé dans la décharge, aucun agent de passivation de l'aluminium ne soit mélangé dans la décharge; et
(ii) lorsque, après le mélange de l'agent de passivation du vanadium dans la décharge du chloreur, il n'est pas formé d'oxychlorure de titane dans la décharge, mélange dans la décharge d'une quantité d'agent de passivation de l'aluminium pour passiver les chlorures d'aluminium et réagir avec le tétrachlorure de titane pour former de l'oxychlorure de titane;
et
(b) la séparation à partir de la décharge du chloreur de tétrachlorure de titane des composés contenant du vanadium et de l'aluminium faciles à séparer pour former un tétrachlorure de titane purifié.

2. Procédé selon la revendication 1, dans lequel le procédé de séparation est choisi dans le groupe constitué d'une distillation éclair, d'une distillation à étages multiples, d'un procédé de séparation solide-liquide, d'une filtration et d'une centrifugation.

3. Procédé selon la revendication 1, dans lequel l'agent de passivation du vanadium et l'agent de passivation de l'aluminium sont mélangés dans la décharge essentiellement simultanément.

4. Procédé selon la revendication 1, dans lequel l'agent de passivation du vanadium est mélangé dans la décharge avant que l'agent de passivation de l'aluminium soit mélangé dans le courant de décharge.

5. Procédé selon la revendication 1, dans lequel l'agent de passivation du vanadium est mélangé dans la décharge après que l'agent de passivation de l'aluminium est mélangé dans le courant de décharge.

6. Procédé selon la revendication 1, dans lequel l'agent de passivation du vanadium est mélangé dans la décharge dans une quantité suffisante pour réduire la concentration, mais sans les éliminer, des chlorures de vanadium présents.

7. Procédé selon la revendication 1, dans lequel l'agent de passivation de l'aluminium est composé d'une purge contenant des produits issus de la passivation de chlorures de vanadium enlevés d'une étape de procédé suivant l'étape de séparation.

8. Procédé selon la revendication 1, dans lequel les ajouts de l'agent de passivation du vanadium et l'agent de passivation de l'aluminium sont régulés par une méthode de procédé de régulation.

9. Procédé selon la revendication 1, dans lequel l'agent de passivation du vanadium est une huile de pétrole, une huile végétale ou une combinaison de celles-ci.

10. Procédé selon la revendication 1, dans lequel l'agent de passivation du vanadium est une huile naphténique hydrogénée.
